# EUROPÄISCHE PATENTSCHRIFT

(11) **EP 1 162 119 B1**
(45) Veröffentlichungstag und Bekanntmachung des Hinweises auf die Patenterteilung: **02.07.2003**
(21) Anmeldenummer: 01112641.4
(22) Anmeldetag: 25.05.2001
(51) Int. Cl.: B60T 11/236

(54) **Kolben für einen Hydraulikzylinder**
Piston for an hydraulic cylinder
Piston pour un vérin hydraulique

(30) Priorität: 09.06.2000 DE 10028673
(43) Veröffentlichungstag der Anmeldung: 12.12.2001
(73) Patentinhaber: FTE automotive GmbH, 96106 Ebern (DE)
(72) Erfinder: Keller, Christoph, 97711 Massbach (DE); Gebert, Stefan, 96242 Gestungshausen (DE); Sauer, Herbert, 96176 Pfarrweisach-Junkersdorf (DE)
(74) Vertreter: Oppermann, Mark, Dipl.-Ing.

(56) Entgegenhaltungen:
- EP-A- 0 295 395
- EP-A- 0 312 673
- DE-A- 3 728 783
- DE-A- 19 806 420
- US-A- 5 794 512

## Beschreibung

Die vorliegende Erfindung bezieht sich auf einen Kolben zur variablen Begrenzung eines Druckraums in einem Gehäuse eines Hydraulikzylinders gemäß dem Oberbegriff des Patentanspruchs 1. Insbesondere bezieht sich die Erfindung auf einen Kolben für Geberzylinder von hydraulischen Kupplungsbetätigungs- oder Bremssystemen in Kraftfahrzeugen, wie sie massenweise im Automobilbau zum Einsatz kommen.

Derartige Kolben dienen dazu, bei einer axialen Relativverschiebung bezüglich des Gehäuses des Hydraulikzylinders im Druckraum einen Druck zu erzeugen. Mit diesem Druck wird etwa ein mit dem Hydraulikzylinder hydraulisch verbundener Kupplungsnehmerzylinder beaufschlagt, welcher zum Ausrücken einer Kupplung mit der Kupplung wirkverbunden ist. Die hier betrachteten Kolben, aufgrund ihrer Bauart auch Plungerkolben genannt, haben ein Hauptteil mit einer Lauffläche für (mindestens) ein Dichtelement und eine Nachlaufeinrichtung. Das Dichtelement ist am Gehäuse des Hydraulikzylinders angebracht und dient dazu, in einer Betriebsstellung des Kolbens, d.h. bei einem in Richtung des Druckraums verschobenen Kolben im Zusammenwirken mit der Lauffläche den Druckraum abzudichten. Die Nachlaufeinrichtung verbindet in einer Grundstellung, d.h. einer auf einen Anschlag gezogenen Stellung des Kolbens den Druckraum mit einem Nachlaufbereich, der seinerseits an einen Nachlaufbehälter angeschlossen ist.

Im Stand der Technik fehlt es nicht an Vorschlägen, wie die Nachlaufeinrichtung auszubilden ist. So ist ein aus wirtschaftlichen Gründen vollständig aus Kunststoff bestehender Kolben bekannt (DE 38 16 608 A1), der an seinem druckraumseitigen Ende mit in Längsrichtung verlaufenden Schlitzen versehen ist, welche auf einfache Weise die Nachlaufeinrichtung ausbilden. Es hat sich hierbei aber als nachteilig herausgestellt, daß es beieiner Relativverschiebung zwischen Kunststoffkolben und Dichtelement zu einer im Automobilbau unerwünschten Geräuschbildung kommt, die durch die Oberflächenstruktur des Kunststoffs hervorgerufen zu sein scheint.

Deshalb wurde vorgeschlagen, zur Ausbildung des Kolbens einen aus Kunststoff bestehenden Grundkörper mindestens im Bereich der Lauffläche mit einem dünnwandigen metallischen Rohr zu ummanteln (DE 37 13 248 C2) bzw. mit einer aus Blech geformten Kolbenschafthülse zu versehen (siehe z.B. die gattungsbildende DE 195 23 215 A1), die einen druckraumseitig geschlossenen Boden aufweist. Bei diesen Kolben wird die Nachlaufeinrichtung durch sich in axialer Richtung erstreckende Schnüffelnuten ausgebildet, die an dem dem Druckraum zugewandten Ende der Kolbenschafthülse in die Mantelfläche der Kolbenschafthülse eingebracht sind. Dies geschieht in der Regel spanlos, d.h. mittels eines Prägevorgangs.

Zwar stellt ein solcher Prägevorgang ein wirtschaftliches Fertigungsverfahren dar, mit ihm sind jedoch auch Nachteile verbunden. So kann ein scharfer, maßlich exakter Auslauf der am Umfang verteilten Schnüffelnuten nicht gewährleistet werden. In der Folge können die Schnüffelnuten eine unterschiedliche Länge aufweisen. Damit dies zu keiner Funktionsbeeinträchtigung der Nachlaufeinrichtung führt, wenn sich der Kolben in seiner Grundstellung befindet, ist das Dichtelement im Gehäuse des Hydraulikzylinders mit größeren Toleranzen zu positionieren. Das hat aber zur Folge, daß längere Leerwege vom Kolben zu überfahren sind, bevor im Druckraum ein Druck aufgebaut werden kann, was letztendlich zu einem unerwünschten Pedalwegverlust führt. Hinzu kommt, daß durch den Prägevorgang eine auf der Kolbenschafthülse aufgebrachte Oberflächenbeschichtung gegen Korrosion beschädigt und abgelöst werden kann, was im Betrieb über kurz oder lang zu unerwünschten Leckagen führt. Entsprechendes gilt für metallisch beschichtete Oberflächen von ansonsten vollständig aus Kunststoff gefertigten Plungerkolben.

Schließlich sind Kolben bekannt, die aus einem Vollmaterial wie einer Aluminiumlegierung gefertigt sind, wobei die am druckraumseitigen Ende vorgesehenen Ausgleichsnuten spanend durch Nutenfräsen eingebracht werden. Die so erzeugten Ausgleichsnuten müssen jedoch aufwendig entgratet werden, damit es im Betrieb zu keiner Beschädigung des Dichtelements kommt. Ebenso wie bei den oben beschriebenen Kolbenausbildungen besteht zudem die Gefahr, daß die Lauffläche des Kolbens beschädigt wird, wenn der Kolben zum Einbringen der Ausgleichsnuten gefaßt oder gespannt werden muß.

Der Erfindung liegt die Aufgabe zugrunde, einen einfach herstellbaren Kolben für Hydraulikzylinder zu schaffen, der im Hinblick auf die Nachlaufeinrichtung eine gegenüber dem eingangs geschilderten Stand der Technik verbesserte Funktionalität aufweist.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 17.

Erfindungsgemäß ist bei einem Plungerkolben zur variablen Begrenzung eines Druckraums in einem Gehäuse eines Hydraulikzylinders, insbesondere eines Kupplungsgeberzylinders für Kraftfahrzeuge, der ein Hauptteil aufweist, an dem eine Lauffläche für ein gehäuseseitiges Dichtelement vorgesehen ist, das in einer Betriebsstellung des Kolbens den Druckraum abdichtet, und der weiterhin eine Nachlaufeinrichtung hat, an der in einer Grundstellung des Kolbens das Dichtelement anliegt, wobei die Nachlaufeinrichtung angepaßt ist, in der Grundstellung des Kolbens den Druckraum mit einem Nachlaufbereich unter dem Dichtelement hinweg zu verbinden, die Nachlaufeinrichtung separat vom Hauptteil hergestellt und zur Ausbildung des Kolbens mit dem Hauptteil spielfrei verbunden.

Durch diese zweigeteilte Ausführung des Kolbens kann die Nachlaufeinrichtung auf einfache Weise eng toleriert hergestellt werden, ohne die Gefahr, daß die am Hauptteil des Kolbens vorgesehene Lauffläche beschädigt wird und nachgearbeitet werden muß, bevor die Nachlaufeinrichtung spielfrei und damit ohne Schaffung weiterer Maßabweichungen zum Hauptteil des Kolbens gefügt wird. Im Ergebnis kann das Dichtelement im Gehäuse des Hydraulikzylinders vorteilhaft mit engeren Toleranzen positioniert und somit der Hydraulikzylinder im Hinblick auf Pedalwegverluste optimiert werden. Ein weiterer Vorteil der zweiteiligen Kolbenausbildung ist darin zu sehen, daß sie wirtschaftliche Baukastenlösungen ermöglicht. So kann etwa die gleiche Nachlaufeinrichtung an Hauptteilen verschiedener Länge eingesetzt werden, um Kolben zu schaffen, die einen den jeweiligen Erfordernissen entsprechenden Hub gestatten.

In einer vorteilhaft einfachen Ausgestaltung des Kolbens gemäß dem Patentanspruch 2 ist die Nachlaufeinrichtung als Ringteil mit einem im wesentlichen U-förmigen Querschnitt ausgebildet. Die spielfreie Verbindung zwischen der Nachlaufeinrichtung und dem Hauptteil erfolgt vorzugsweise mittels einer Schnappverbindung, wie im Patentanspruch 3 angegeben, welche einen leichten Zusammenbau des Kolbens ermöglicht.

Ist entsprechend dem Patentanspruch 4 der Außendurchmesser der Lauffläche geringfügig größer als der Außendurchmesser der Nachlaufeinrichtung gewählt und am Hauptteil ein schräger Übergangsabschnitt zwischen der Lauffläche und der Nachlaufeinrichtung vorgesehen, wird die Dichtlippe des Dichtelements in der Grundstellung des Kolbens unter Anlage an der Nachlaufeinrichtung in vorteilhafter Weise etwas entlastet, während bei einer Bewegung des Kolbens aus der Grundstellung heraus in eine Betriebsstellung über den Übergangsabschnitt eine schonende Aufdehnung der Dichtlippe erfolgt.

In einer vorteilhaften Ausgestaltung des Kolbens gemäß dem Patentanspruch 5 weist die Nachlaufeinrichtung einen radial äußeren Ringabschnitt und einen radial inneren Ringabschnitt auf, die über einen stirnseitigen Ringscheibenabschnitt miteinander verbunden sind. Hierbei hat nach der Lehre des Patentanspruchs 6 der äußere Ringabschnitt der Nachlaufeinrichtung eine zylindrische Außenumfangsfläche, an der in der Grundstellung des Kolbens das Dichtelement anliegt und die mit einer Mehrzahl von über den Umfang verteilten Ausgleichsnuten versehen ist, welche sich ausgehend von dem freien Ende des äußeren Ringabschnitts in axialer Richtung erstrecken, um in der Grundstellung des Kolbens für die Verbindung zwischen dem Druckraum und dem Nachlaufbereich unter dem Dichtelement bzw. dessen Dichtlippe hinweg zu sorgen. Vorzugsweise erstrecken sich die Ausgleichsnuten an der Außenumfangsfläche des äußeren Ringabschnitts über die gesamte Länge der Außenumfangsfläche, wie im Patentanspruch 7 angegeben, was u.a. eine einfache Herstellung gestattet.

Weiterhin ist gemäß dem Patentanspruch 8 vorgesehen, daß der äußere Ringabschnitt der Nachlaufeinrichtung eine zylindrische Innenumfangsfläche hat, mittels der sich die Nachlaufeinrichtung in vorteilhaft einfacher Weise an einem Zentrierabsatz des Hauptteils radial zentriert und die mit einer Mehrzahl von über den Umfang verteilten Ausgleichsnuten versehen ist, welche sich ausgehend von dem freien Ende des äußeren Ringabschnitts in axialer Richtung erstrecken und deren axiale Länge nach der Lehre des Patentanspruchs 9 größer ist als die Breite des Zentrierabsatzes, um über den Zentrierabsatz hinweg eine hydraulische Verbindung zu gestatten. Ferner bildet das freie Ende des äußeren Ringabschnitts der Nachlaufeinrichtung eine Ringschulter aus, wie im Patentanspruch 10 angegeben, mit der sich die Nachlaufeinrichtung in axialer Richtung auf einfache Weise spielfrei am Hauptteil abstützt und die mit einer Mehrzahl von Verbindungsnuten versehen ist, welche in radialer Richtung verlaufen. Gemäß dem Patentanspruch 11 verbinden die Verbindungsnuten an der Ringschulter die Ausgleichsnuten an der Außenumfangsfläche mit den Ausgleichsnuten an der Innenumfangsfläche des äußeren Ringabschnitts. Schließlich ist entsprechend dem Patentanspruch 12 der Ringscheibenabschnitt der Nachlaufeinrichtung mit mindestens einem sich in axialer Richtung erstrekkenden Verbindungskanal versehen.

Es ist ersichtlich, daß entsprechend der oben beschriebenen Ausbildung der Nachlaufeinrichtung nicht nur über einen äußeren Bereich der Nachlaufeinrichtung eine Verbindung zwischen dem Druckraum und dem Nachlaufbereich bewirkt werden kann, wenn sich der Kolben in der Grundstellung befindet, sondern in vorteilhafter Weise auch über einen inneren Bereich der Nachlaufeinrichtung, nämlich ausgehend vom Druckraum über den Verbindungskanal im Ringscheibenabschnitt, die Ausgleichsnuten an der Innenumfangsfläche des äußeren Ringabschnitts und die Verbindungsnuten an der Ringschulter des äußeren Ringabschnitts. Durch diese Ausbildung der Nachlaufeinrichtung läßt sich auf einfache und zuverlässige Weise der unerwünschte, sogenannte "Restdruckaufbau" im Druckraum vermeiden.

Wird die Lage des Dichtelements wie oben bereits angesprochen im Hinblick auf Pedalwegverluste optimiert, d.h. der auch als Überfahr- oder Ventilschließweg bezeichnete Hub minimiert, den der Kolben ausgehend von der Grundstellung zurücklegen muß, bis das Dichtelement mit seiner Dichtlippe von der Nachlaufeinrichtung freikommt, um Druckraum und Nachlaufbereich zu trennen, besteht grundsätzlich die Gefahr eines "Restdruckaufbaus" im Druckraum. Es kann dann nämlich vorkommen, daß die in einer Betriebsstellung des Kolbens aufgrund des Drucks im Druckraum flächig gegen die Lauffläche des Hauptteils gedrückte Dichtlippe des Dichtelements insbesondere bei hohen Temperaturen der Hydraulikflüssigkeit auch in der Grundstellung des Kolbens mit der Gegenfläche noch flächig verpreßt ist und somit bei einem minimierten Überfahrweg den Durchgang zum Nachlaufbereich (teilweise) verschließt. In der Folge wird ein Restdruck im Druckraum nach Rücklauf des Kolbens in die Grundstellung nicht oder nur zeitverzögert zum Nachlaufbereich hin abgebaut. Dies kann bei hydraulischen Kupplungsbetätigungen dazu führen, daß die Kupplung mit übermäßigem Kupplungsbelagverschleiß schleift bzw. nur ein verringertes Drehmoment übertragen wird.

Die oben beschriebene Verbindung zwischen Druckraum und Nachlaufbereich über den inneren Bereich der Nachlaufeinrichtung schafft hier auf einfache Weise Abhilfe. Über diese innere Verbindung wird je nach Ausbildung und Lage der Dichtlippe des Dichtelements und in Abhängigkeit vom Restdruck im Druckraum nämlich ein Druckausgleich zum vom Druckraum abgewandten Bereich der verpreßten Dichtlippe hergestellt und somit für einen partiellen Druckausgleich an der Dichtlippe gesorgt bzw. die verpreßte Dichtlippe von der Gegenfläche abgehoben, so daß im Ergebnis ein Druckausgleich zum Nachlaufbereich hin ermöglicht wird. Mit anderen Worten gesagt kann durch die mit der Nachlaufeinrichtung geschaffene innere Verbindung in der Grundstellung des Kolbens eine hydraulische Vorspannung der Dichtlippe des Dichtelements zuverlässig aufgehoben bzw. umgangen werden.

Gemäß dem Patentanspruch 13 ist der innere Ringabschnitt der Nachlaufeinrichtung zur Ausbildung von Federzungen mehrfach geschlitzt, wobei nach der Lehre des Patentanspruchs 14 jede der Federzungen endseitig eine nach radial innen vorspringende Nase aufweist, welche mit einer an einem Befestigungsabsatz des Hauptteils angebrachten Radialnut in Eingriff bringbar ist. Die obige Schnappverbindung wird somit auf einfache Weise geschaffen. Vorzugsweise ist dabei die Nase auf ihrer dem Druckraum zugewandten Seite mit einer Schräge versehen, wie im Patentanspruch 15 angegeben, was ein sonst ggf. vorhandenes, unerwünschtes Axialspiel ausschließt.

Gemäß dem Patentanspruch 16 kann die Nachlaufeinrichtung in herstellungstechnisch vorteilhafter Weise einteilig aus Kunststoff spritzgegossen sein, was nicht nur kostengünstig ist sondern auch die funktional gewollten, engen Toleranzen auf einfache Weise und ohne die Notwendigkeit einer Nachbearbeitung gewährleistet.

Nach der Lehre des Patentanspruchs 17 kann es sich schließlich bei dem Hauptteil um einen Vollkörper aus vorzugsweise einem NE-Metall handeln, an dem ggf. eine die Lauffläche ausbildende rohrförmige Hülse oder eine Beschichtung angebracht ist. Es ist aber auch möglich, daß es sich bei dem Hauptteil um einen im wesentlichen topfförmigen Körper aus vorzugsweise einem Stahlblech handelt, der ggf. einen Füllkörper aus vorzugsweise Kunststoff umgibt, wie ebenfalls im Patentanspruch 17 angegeben. Im Ergebnis können die bekannten, hinsichtlich Geräuschverhalten und Wirtschaftlichkeit optimierten Laufflächengestaltungen beibehalten werden.

Im folgenden wird die Erfindung anhand eines bevorzugten Ausführungsbeispiels unter Bezugnahme auf die beigefügte Zeichnung näher erläutert. Darin zeigen:
- Fig. 1: eine Längsschnittansicht eines Hydraulikzylinders mit einem sich in Grundstellung befindenden, mehrteiligen erfindungsgemäßen Kolben, der ein Hauptteil und eine damit spielfrei verbundene Nachlaufeinrichtung hat,
- Fig. 2: eine gegenüber der Fig. 1 vergrößerte, abgebrochene Längsschnittansicht des Hydraulikzylinders im Bereich der Dichtelemente, die der Einfachheit halber im unverformten Zustand eingezeichnet sind,
- Fig. 3: die Nachlaufeinrichtung gemäß Fig. 2 in einer perspektivischen Darstellung und
- Fig. 4: die Nachlaufeinrichtung gemäß Fig. 2 in einer vergrößerten Schnittansicht, wobei lediglich die obere Hälfte der rotationssymmetrischen Nachlaufeinrichtung gezeigt ist.

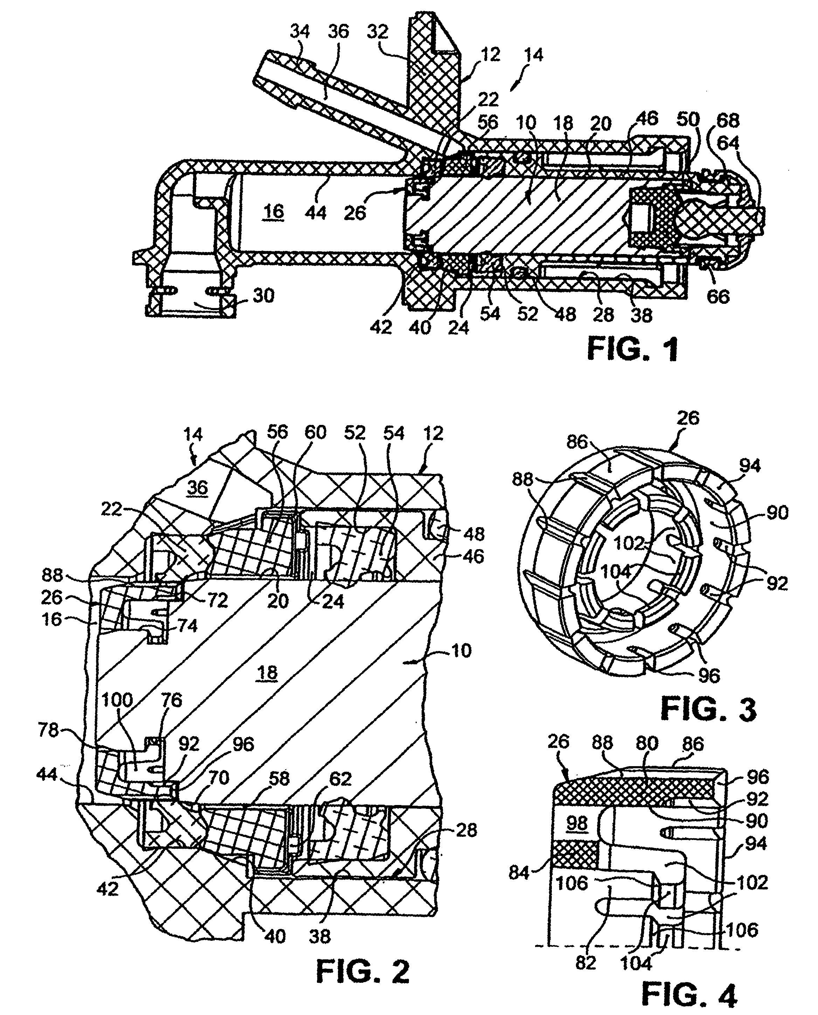

Die Fig. 1 und 2 zeigen einen Kolben 10, genauer einen sogenannten Plungerkolben, der in einem Gehäuse 12 eines exemplarisch für einen Hydraulikzylinder 14 dargestellten Kupplungsgeberzylinders einen Druckraum 16 variabel begrenzt. Der Kolben 10 hat ein Hauptteil 18, im dargestellten Ausführungsbeispiel in Form eines Vollkörpers aus einem NE-Metall, etwa einer Aluminiumlegierung, an dem eine Lauffläche 20 für ein gehäuseseitiges Primärdichtelement 22 vorgesehen ist. Das Primärdichtelement 22 dichtet in einer nicht dargestellten Betriebsstellung des Kolbens 10, in der es sich über der Lauffläche 20 befindet, den Druckraum 16 gegenüber einem Nachlaufbereich 24 ab, damit im Druckraum 16 infolge eines Hubs des Kolbens 10 nach links in Fig. 1 ein Druck aufgebaut werden kann. Der Kolben 10 hat ferner eine im folgenden noch ausführlich beschriebene Nachlaufeinrichtung 26, welche in der in den Fig. 1 und 2 gezeigten Grundstellung des Kolbens 10 den Druckraum 16 mit dem Nachlaufbereich 24 verbindet, um einen Druckausgleich zwischen dem Druckraum 16 und dem Nachlaufbereich 24 zu schaffen, einen Nachlauf von Hydraulikflüssigkeit vom Nachlaufbereich 24 in den Druckraum 16 zu gestatten und ggf. ein Entweichen von Luft aus dem Druckraum 16 über den Nachlaufbereich 24 zu ermöglichen. Wesentlich ist, daß die in den Fig. 3 und 4 detailliert dargestellte Nachlaufeinrichtung 26 separat vom Hauptteil 18 hergestellt und zur Ausbildung des Kolbens 10 mit dem Hauptteil 18 spielfrei verbunden ist, wie noch näher beschrieben werden wird.

Das aus Kunststoff bestehende Gehäuse 12 hat ausgehend von seinem in Fig. 1 rechten Ende eine gestufte Sackbohrung 28, an deren in Fig. 1 linkem Ende ein Druckanschluß 30 vorgesehen ist, über den der Hydraulikzylinder 14 mit einem Nehmerzylinder (nicht dargestellt) verbunden werden kann. Das Gehäuse 12 ist ferner im wesentlichen mittig mit einem Befestigungsflansch 32 und einem Nachlaufanschluß 34 versehen, über den der Hydraulikzylinder 14 an einen Nachlaufbehälter (nicht dargestellt) angeschlossen werden kann. Der Nachlaufanschluß 34 hat einen Nachlaufkanal 36, der in der Sackbohrung 28 im Nachlaufbereich 24 mündet.

Die Sackbohrung 28 des Gehäuses 12 bildet im wesentlichen vier Funktionsabschnitte mit sich in Fig. 1 von rechts nach links verkleinerndem Durchmesser aus. Ausgehend von ihrem in Fig. 1 rechten Ende hat die Sackbohrung 28 zunächst einen ersten zylindrischen Abschnitt 38, der über eine kleine Ringschulter und einen konischen Übergangsabschnitt 40 in einen zweiten zylindrischen Abschnitt 42 übergeht, an den sich über eine größere Ringschulter ein dritter zylindrischer Abschnitt 44 anschließt.

Im ersten zylindrischen Abschnitt 38 der Sackbohrung 28 ist eine Führungshülse 46 für den Kolben 10 befestigt. Zwischen der Führungshülse 46 und dem Gehäuse 12 ist der Hydraulikzylinder 14 mittels einer statischen Dichtung in Form eines 0-Rings 48 zur Atmosphäre hin abgedichtet. Die Führungshülse 46 bildet an ihrem in Fig. 1 rechten Ende einen Anschlag 50 für den Kolben 10 aus, der ein Herausziehen des Kolbens 10 aus dem Gehäuse 12 verhindert. An ihrem in Fig. 1 linken Ende hat die Führungshülse 46 am Innenumfang einen Absatz 52, welcher der Aufnahme eines Sekundärdichtelements 54 dient, das mit seiner dynamischen Dichtlippe stets an der Lauffläche 20 anliegt, um den Nachlaufbereich 24 zur Atmosphäre bzw. Umgebung hin abzudichten.

Der konische Übergangsabschnitt 40 der Sackbohrung 28 dient der Zentrierung eines Stützrings 56 für das Primärdichtelement 22, der mit seinem in den Fig. 1 und 2 rechten Ende an einer ringförmigen. Stirnfläche der Führungshülse 46 anliegt und somit in axialer Richtung des Gehäuses 12 festgelegt ist. Infolge der Konusaufnahme des Stützrings 56 an dem konischen Übergangsabschnitt 40 der Sackbohrung 28 stellt sich zwischen der Innenumfangsfläche des Stützrings 56 und der Lauffläche 20 des Kolbens 10 ein Ringspalt 58 von definierter Breite ein, wie in Fig. 2 zu erkennen ist. Der Ringspalt 58 kommuniziert direkt mit dem Nachlaufbereich 24, welcher mit dem Nachlaufkanal 36 über Nuten 60 in Verbindung steht, die sich in zunächst radialer und dann axialer Richtung über die Stirnseite bzw. den Außenumfang des Stützrings 56 erstrecken. Die Nuten 60 erstrecken sich hierbei auch durch eine Ringschulter 62 des Stützrings 56 hindurch, welche dafür sorgt, daß das Sekundärdichtelement 54 die hydraulische Verbindung zwischen dem Nachlaufbereich 24 und dem Nachlaufkanal 36 nicht unterbrechen kann.

An dem zweiten zylindrischen Abschnitt 42 der Sackbohrung 28 ist dann das Primärdichtelement 22 positioniert und in dieser Stellung durch den Stützring 56 definiert gehalten. Schließlich begrenzt der dritte zylindrische Abschnitt 44 der Sackbohrung 28 den Druckraum 16.

Am in Fig. 1 rechten Ende des Kolbens 10 ist eine Kolbenstange 64 mittels eines am Hauptteil 18 befestigten Einsatzteils 66 betätigungswirksam angelenkt. Das Einsatzteil 66 liegt in der dargestellten Grundstellung des Kolbens 10 an dem Anschlag 50 der Führungshülse 46 an. Die Kolbenstange 64 erstreckt sich durch eine Staubmanschette 68 hindurch, die an der Führungshülse 46 befestigt ist.

An dem in den Fig. 1 und 2 linken Ende des Kolbens 10 ist die Nachlaufeinrichtung 26 am Hauptteil 18 mittels einer Schnappverbindung befestigt, wie noch beschrieben werden wird. Der Außendurchmesser der Lauffläche 20 des Hauptteils 18 ist geringfügig größer als der Außendurchmesser der Nachlaufeinrichtung 26, wobei das Hauptteil 18 zwischen der Lauffläche 20 und der Nachlaufeinrichtung 26 einen schrägen bzw. konischen Übergangsabschnitt 70 aufweist. An den Übergangsabschnitt 70 des Hauptteils 18 schließt sich ein im Durchmesser reduzierter, zylindrischer Zentrierabsatz 72 für die Nachlaufeinrichtung 26 an. Das Hauptteil 18 endet mit einem nochmals im Durchmesser reduzierten, zylindrischen Befestigungsabsatz 74 für die Nachlaufeinrichtung 26, der eine Radialnut 76 aufweist und endseitig mit einer Fügeschräge 78 versehen ist, um das Fügen der Nachlaufeinrichtung 26 zum Hauptteil 18 zu erleichtern. Der Befestigungsabsatz 74 begrenzt schließlich mit seiner ebenen Stirnseite den Druckraum 16 im Gehäuse 12.

In den Fig. 3 und 4 ist die vorzugsweise einteilig aus Kunststoff spritzgegossene Nachlaufeinrichtung 26 näher dargestellt. Es ist deutlich zu erkennen, daß die Nachlaufeinrichtung 26 als Ringteil mit einem im wesentlichen U-förmigen Querschnitt ausgebildet ist. Genauer hat die Nachlaufeinrichtung 26 einen radial äußeren Ringabschnitt 80 und einen radial inneren Ringabschnitt 82, die über einen stirnseitigen Ringscheibenabschnitt 84 miteinander verbunden sind.

Der äußere Ringabschnitt 80 der Nachlaufeinrichtung 26 weist eine im wesentlichen zylindrische Außenumfangsfläche 86 auf, an der in der in Fig. 2 dargestellten Grundstellung des Kolbens 10 das Primärdichtelement 22 mit seiner dynamischen Dichtlippe anliegt. Die Außenumfangsfläche 86 ist mit einer Mehrzahl von - im dargestellten Ausführungsbeispiel zwölf - gleichmäßig über den Umfang verteilten Ausgleichsnuten 88 versehen, welche sich ausgehend von dem in den Fig. 3 und 4 freien Ende des äußeren Ringabschnitts 80 in axialer Richtung der Nachlaufeinrichtung 26 erstrecken, und zwar über die gesamte Länge der Außenumfangsfläche 86, die an ihrem im eingebauten Zustand dem Druckraum 16 zugewandten Ende leicht abgeschrägt ist.

Ferner hat der äußere Ringabschnitt 80 eine zylindrische Innenumfangsfläche 90, mittels der sich die Nachlaufeinrichtung 26 an dem Zentrierabsatz 72 des Hauptteils 18 radial zentriert, wie die Fig. 2 zeigt. Die Innenumfangsfläche 90 ist ebenfalls mit einer Mehrzahl von - im dargestellten Ausführungsbeispiel zwölf - gleichmäßig über den Umfang verteilten Ausgleichsnuten 92 versehen, welche sich ausgehend von dem in den Fig. 3 und 4 freien Ende des äußeren Ringabschnitts 80 in axialer Richtung der Nachlaufeinrichtung 26 erstrecken. Wie deutlich in Fig. 2 zu erkennen ist, ist die axiale Länge der Ausgleichsnuten 92 an der Innenumfangsfläche 90 des äußeren Ringabschnitts 80 größer als die Breite des Zentrierabsatzes 72 des Hauptteils 18.

Schließlich bildet das freie Ende des äußeren Ringabschnitts 80 eine Ringschulter 94 aus, mit der sich die Nachlaufeinrichtung 26 in axialer Richtung spielfrei am Hauptteil 18 abstützt. Die Ringschulter 94 ist mit einer Mehrzahl von - im dargestellten Ausführungsbeispiel zwölf - gleichmäßig verteilten Verbindungsnuten 96 versehen, welche in radialer Richtung verlaufen. Wie insbesondere die Fig. 3 zeigt, verbinden die Verbindungsnuten 96 in der Ringschulter 94 die Ausgleichsnuten 88 an der Außenumfangsfläche 86 mit den Ausgleichsnuten 92 an der Innenumfangsfläche 90 des äußeren Ringabschnitts 80.

Gemäß Fig. 4 ist weiterhin der Ringscheibenabschnitt 84 der Nachlaufeinrichtung 26 mit mindestens einem sich in axialer Richtung der Nachlaufeinrichtung 26 erstreckenden Verbindungskanal 98 versehen. Der Verbindungskanal 98 dient dazu, im am Hauptteil 18 montierten Zustand der Nachlaufeinrichtung 26 eine Verbindung zwischen dem Druckraum 16 und einer Ringkammer 100 zu gewährleisten, die von dem Hauptteil 18 und der Nachlaufeinrichtung 26 begrenzt wird.

Wie insbesondere die Fig. 3 und 4 zeigen, ist der innere Ringabschnitt 82 der Nachlaufeinrichtung 26 zur Ausbildung von Federzungen 102 der Schnappverbindung mehrfach geschlitzt. Jede der im dargestellten Ausführungsbeispiel acht Federzungen 102 weist endseitig eine nach radial innen vorspringende Nase 104 auf, die gemäß Fig. 2 im am Hauptteil 18 montierten Zustand der Nachlaufeinrichtung 26 mit der am Befestigungsabsatz 74 des Hauptteils 18 vorgesehenen Radialnut 76 in Eingriff steht. Wie insbesondere der Fig. 4 zu entnehmen ist, ist jede Nase 104 auf ihrer dem Druckraum 16 zugewandten Seite mit einer Schräge 106 versehen, um etwaiges Spiel auszugleichen und die Nachlaufeinrichtung 26 mit ihrer Ringschulter 94 bündig am Hauptteil 18 zu halten.

Es ist ersichtlich, daß die so ausgebildete Nachlaufeinrichtung 26 leicht am Hauptteil 18 befestigt werden kann. Dazu wird die separat vom Hauptteil 18 hergestellte Nachlaufeinrichtung 26 in axialer Richtung auf das Hauptteil 18 zu bewegt, bis die Nasen 104 der Federzungen 102 mit der Fügeschräge 78 am Befestigungsabsatz 74 des Hauptteils 18 in Kontakt treten. Bei einer weiteren Relativverschiebung zwischen Nachlaufeinrichtung 26 und Hauptteil 18 federn die Federzungen 102 elastisch auf, bis die Federzungen 102 gegen Ende der Montagebewegung mit ihren Nasen 104 in der Radialnut 76 am Befestigungsabsatz 74 des Hauptteils 18 einschnappen, während die Ringschulter 94 der Nachlaufeinrichtung 26 spielfrei am Hauptteil 18 zur Anlage gelangt.

Aus der obigen Beschreibung ist ferner ersichtlich, daß in der in den Fig. 1 und 2 dargestellten Grundstellung des Kolbens 10 eine hydraulische Verbindung zwischen dem Druckraum 16 und dem Nachlaufbereich 24 besteht. Diese wird über die Ausgleichsnuten 88 an der Außenumfangsfläche 86 der Nachlaufeinrichtung 26 unter der dynamischen Dichtlippe des Primärdichtelements 22 hinweg bzw. bei mit der Außenumfangsfläche 86 der Nachlaufeinrichtung 26 ungünstig verpreßter dynamischer Dichtlippe des Primärdichtelements 22 zumindest über den Verbindungskanal 98, die Ringkammer 100, die Ausgleichsnuten 92 an der Innenumfangsfläche 90 und die Verbindungsnuten 96 an der Ringschulter 94 der Nachlaufeinrichtung 26 sowie im weiteren über den Ringspalt 58 zwischen der Lauffläche 20 und dem Stützring 56 gewährleistet.

Die beschriebene hydraulische Verbindung zwischen dem Druckraum 16 und dem Nachlaufbereich 24 wird unterbrochen, sobald der Kolben 10 in Richtung des Druckraums 16, d.h. in den Fig. 1 und 2 nach links in eine Betriebsstellung bewegt wird, wobei die dynamische Dichtlippe des Primärdichtelements 22 mit ihrer Dichtkontur über die Lauffläche 20 des Kolbens 10 kommt und den Druckraum 16 zum Nachlaufbereich 24 hin abdichtet, damit im Druckraum 16 ein Druck aufgebaut werden kann.

Im dargestellten Ausführungsbeispiel handelt es sich bei dem Hauptteil 18 des Kolbens 10 um einen Vollkörper aus einem NE-Metall, dessen Außenumfang unmittelbar die Lauffläche 20 des Kolbens 10 ausbildet. Den jeweiligen Erfordernissen entsprechend kann dieser Vollkörper aber auch aus einem anderen Material bestehen und/oder am Außenumfang mit einer rohrförmigen Hülse bzw. einer Beschichtung versehen sein, welche die Lauffläche ausbildet. Ferner ist es möglich, daß es sich bei dem Hauptteil um einen im wesentlichen topf- oder becherförmigen Körper aus z.B. einem Stahlblech handelt, der ggf. einen Füllkörper aus vorzugsweise Kunststoff umgibt. Jedenfalls muß das entsprechende Hauptteil an seinem im eingebauten Zustand dem Druckraum zugewandten Ende eine Geometrie aufweisen, welche eine spielfreie Verbindung mit der Nachlaufeinrichtung gestattet.

Die obige Beschreibung der Erfindung erfolgte beispielhaft an einem Geberzylinder einer hydraulischen Kupplungsbetätigung für Kraftfahrzeuge. Für den Fachmann ist jedoch ersichtlich, daß die beschriebene Nachlaufeinrichtung z.B. auch an Kolben von Hauptzylindern für hydraulische Bremsanlagen in Kraftfahrzeugen Verwendung finden kann.

Es wird ein Kolben zur variablen Begrenzung eines Druckraums in einem Gehäuse eines Hydraulikzylinders, insbesondere eines Kupplungsgeberzylinders für Kraftfahrzeuge offenbart. Der Kolben hat ein Hauptteil, an dem eine Lauffläche für ein gehäuseseitiges Dichtelement vorgesehen ist, das in einer Betriebsstellung des Kolbens den Druckraum abdichtet. Ferner weist der Kolben eine Nachlaufeinrichtung auf, welche in einer Grundstellung des Kolbens den Druckraum mit einem Nachlaufbereich verbindet. Erfindungsgemäß ist die Nachlaufeinrichtung separat vom Hauptteil hergestellt und zur Ausbildung des Kolbens mit dem Hauptteil spielfrei verbunden. Im Ergebnis wird ein einfach herstellbarer Kolben geschaffen, der im Hinblick auf die Nachlaufeinrichtung eine gegenüber dem Stand der Technik verbesserte Funktionalität aufzeigt.

### Bezugszeichenliste

- 10: Kolben
- 12: Gehäuse
- 14: Hydraulikzylinder
- 16: Druckraum
- 18: Hauptteil
- 20: Lauffläche
- 22: Primärdichtelement
- 24: Nachlaufbereich
- 26: Nachlaufeinrichtung
- 28: Sackbohrung
- 30: Druckanschluß
- 32: Befestigungsflansch
- 34: Nachlaufanschluß
- 36: Nachlaufkanal
- 38: erster zylindrischer Abschnitt
- 40: konischer Übergangsabschnitt
- 42: zweiter zylindrischer Abschnitt
- 44: dritter zylindrischer Abschnitt
- 46: Führungshülse
- 48: O-Ring
- 50: Anschlag
- 52: Absatz
- 54: Sekundärdichtelement
- 56: Stützring
- 58: Ringspalt
- 60: Nut
- 62: Ringschulter
- 64: Kolbenstange
- 66: Einsatzteil
- 68: Staubmanschette
- 70: Übergangsabschnitt
- 72: Zentrierabsatz
- 74: Befestigungsabsatz
- 76: Radialnut
- 78: Fügeschräge
- 80: äußerer Ringabschnitt
- 82: innerer Ringabschnitt
- 84: Ringscheibenabschnitt
- 86: Außenumfangsfläche
- 88: Ausgleichsnut
- 90: Innenumfangsfläche
- 92: Ausgleichsnut
- 94: Ringschulter
- 96: Verbindungsnut
- 98: Verbindungskanal
- 100: Ringkammer
- 102: Federzunge
- 104: Nase
- 106: Schräge

## Patentansprüche

1. Plungerkolben (10) zur variablen Begrenzung eines Druckraums (16) in einem Gehäuse (12) eines Hydraulikzylinders (14), insbesondere eines Kupplungsgeberzylinders für Kraftfahrzeuge, mit
einem Hauptteil (18), an dem eine Lauffläche (20) für ein gehäuseseitiges Dichtelement (22) vorgesehen ist, das in einer Betriebsstellung des Kolbens (10) den Druckraum (16) abdichtet, und
einer Nachlaufeinrichtung (26), an der in einer Grundstellung (Fig. 2) des Kolbens (10) das Dichtelement (22) anliegt, wobei die Nachlaufeinrichtung (26) angepaßt ist, in der Grundstellung des Kolbens (10) den Druckraum (16) mit einem Nachlaufbereich (24) unter dem Dichtelement (22) hinweg zu verbinden,
**dadurch gekennzeichnet, daß** die Nachlaufeinrichtung (26) separat vom Hauptteil (18) hergestellt und zur Ausbildung des Kolbens (10) mit dem Hauptteil (18) spielfrei verbunden ist.

2. Kolben (10) nach Anspruch 1, **dadurch gekennzeichnet, daß** die Nachlaufeinrichtung (26) als Ringteil mit einem im wesentlichen U-förmigen Querschnitt ausgebildet ist.

3. Kolben (10) nach Anspruch 1 oder 2, **dadurch gekennzeichnet, daß** die Nachlaufeinrichtung (26) und das Hauptteil (18) mittels einer Schnappverbindung verbunden sind.

4. Kolben (10) nach einem der vorhergehenden Ansprüche, **dadurch gekennzeichnet, daß** der Außendurchmesser der Lauffläche (20) geringfügig größer ist als der Außendurchmesser der Nachlaufeinrichtung (26), wobei das Hauptteil (18) zwischen der Lauffläche (20) und der Nachlaufeinrichtung (26) einen schrägen Übergangsabschnitt (70) aufweist.

5. Kolben (10) nach einem der vorhergehenden Ansprüche, **dadurch gekennzeichnet, daß** die Nachlaufeinrichtung (26) einen radial äußeren Ringabschnitt (80) und einen radial inneren Ringabschnitt (82) aufweist, die über einen stirnseitigen Ringscheibenabschnitt (84) miteinander verbunden sind.

6. Kolben (10) nach Anspruch 5, **dadurch gekennzeichnet, daß** der äußere Ringabschnitt (80) der Nachlaufeinrichtung (26) eine zylindrische Außenumfangsfläche (86) hat, an der in der Grundstellung (Fig. 2) des Kolbens (10) das Dichtelement (22) anliegt und die mit einer Mehrzahl von über den Umfang verteilten Ausgleichsnuten (88) versehen ist, welche sich ausgehend von dem freien Ende des äußeren Ringabschnitts (80) in axialer Richtung erstrecken.

7. Kolben (10) nach Anspruch 6, **dadurch gekennzeichnet, daß** sich die Ausgleichsnuten (88) an der Außenumfangsfläche (86) des äußeren Ringabschnitts (80) über die gesamte Länge der Auβenumfangsfläche (86) erstrecken.

8. Kolben (10) nach einem der Ansprüche 5 bis 7, **dadurch gekennzeichnet, daß** der äußere Ringabschnitt (80) der Nachlaufeinrichtung (26) eine zylindrische Innenumfangsfläche (90) hat, mittels der sich die Nachlaufeinrichtung (26) an einem Zentrierabsatz (72) des Hauptteils (18) radial zentriert und die mit einer Mehrzahl von über den Umfang verteilten Ausgleichsnuten (92) versehen ist, welche sich ausgehend von dem freien Ende des äußeren Ringabschnitts (80) in axialer Richtung erstrecken.

9. Kolben (10) nach Anspruch 8, **dadurch gekennzeichnet, daß** die axiale Länge der Ausgleichsnuten (92) an der Innenumfangsfläche (90) des äußeren Ringabschnitts (80) größer ist als die Breite des Zentrierabsatzes (72) des Hauptteils (18).

10. Kolben (10) nach einem der Ansprüche 5 bis 9, **dadurch gekennzeichnet, daß** das freie Ende des äußeren Ringabschnitts (80) der Nachlaufeinrichtung (26) eine Ringschulter (94) ausbildet, mit der sich die Nachlaufeinrichtung (26) in axialer Richtung am Hauptteil (18) abstützt und die mit einer Mehrzahl von Verbindungsnuten (96) versehen ist, welche in radialer Richtung verlaufen.

11. Kolben (10) nach Anspruch 10, **dadurch gekennzeichnet, daß** die Verbindungsnuten (96) an der Ringschulter (94) die Ausgleichsnuten (88) an der Außenumfangsfläche (86) mit den Ausgleichsnuten (92) an der Innenumfangsfläche (90) des äußeren Ringabschnitts (80) verbinden.

12. Kolben (10) nach einem der Ansprüche 5 bis 11, **dadurch gekennzeichnet, daß** der Ringscheibenabschnitt (84) der Nachlaufeinrichtung (26) mit mindestens einem sich in axialer Richtung erstreckenden Verbindungskanal (98) versehen ist.

13. Kolben (10) nach einem der Ansprüche 5 bis 12, **dadurch gekennzeichnet, daß** der innere Ringabschnitt (82) der Nachlaufeinrichtung (26) zur Ausbildung von Federzungen (102) mehrfach geschlitzt ist.

14. Kolben (10) nach Anspruch 13, **dadurch gekennzeichnet, daß** jede Federzunge (102) endseitig eine nach radial innen vorspringende Nase aufweist (104), die mit einer an einem Befestigungsabsatz (74) des Hauptteils (18) angebrachten Radialnut (76) in Eingriff bringbar ist.

15. Kolben (10) nach Anspruch 14, **dadurch gekennzeichnet, daß** die Nase (104) auf ihrer dem Druckraum (16) zugewandten Seite mit einer Schräge (106) versehen ist.

16. Kolben (10) nach einem der vorhergehenden Ansprüche, **dadurch gekennzeichnet, daß** die Nachlaufeinrichtung (26) einteilig aus Kunststoff spritzgegossen ist.

17. Kolben (10) nach einem der vorhergehenden Ansprüche, **dadurch gekennzeichnet, daß** es sich bei dem Hauptteil (18) um einen Vollkörper aus vorzugsweise einem NE-Metall handelt, an dem ggf. eine die Lauffläche (20) ausbildende rohrförmige Hülse oder eine Beschichtung angebracht ist, oder daß es sich bei dem Hauptteil (18) um einen im wesentlichen topfförmigen Körper aus vorzugsweise einem Stahlblech handelt, der ggf. einen Füllkörper aus vorzugsweise Kunststoff umgibt.

## Claims

1. Plunger piston (10) for the variable delimitation of a pressure chamber (16) in a housing (12) of a hydraulic cylinder (14), in particular of a clutch master cylinder for motor vehicles, comprising
a main part (18) on which a running surface (20) is provided for a sealing element (22) on the housing side, which, in an operating position of the piston (10), seals the pressure chamber (16), and
an after-running device (26) against which, in a normal position (Fig. 2) of the piston (10), the sealing element (22) abuts, wherein the after-running device (26) is adapted to connect, in the normal position of the piston (10) and underneath the sealing element (22), the pressure chamber (16) to an after-running area (24),
**characterized in that** the after-running device (26) is made separately from the main part (18) and is connected to the main part (18) without play to form the piston (10).

2. Piston (10) according to claim 1, **characterized in that** the after-running device (26) is designed as an annular part with an essentially U-shaped cross-section.

3. Piston (10) according to claim 1 or 2, **characterized in that** the after-running device (26) and the main part (18) are connected by means of a snap connection.

4. Piston (10) according to one of the preceding claims, **characterized in that** the outside diameter of the running surface (20) is slightly larger than the outside diameter of the after-running device (26), the main part (18) having a sloping transition section (70) between the running surface (20) and the after-running device (26).

5. Piston (10) according to one of the preceding claims, **characterized in that** the after-running device (26) has a radially outer annular section (80) and a radially inner annular section (82) which are connected to each other via an annular disc section (84) on the front side.

6. Piston (10) according to claim 5, **characterized in that** the outer annular section (80) of the after-running device (26) has a cylindrical outside perimeter surface (86) against which the sealing element (22) abuts in the normal position (Fig. 2) of the piston (10) and which is provided with a plurality of equalization grooves (88) distributed over the perimeter, which extend in the axial direction from the free end of the outer annular section (80).

7. Piston (10) according to claim 6, **characterized in that** the equalization grooves (88) on the outside perimeter surface (86) of the outer annular section (80) extend over the entire length of the outside perimeter surface (86).

8. Piston (10) according to one of claims 5 to 7, **characterized in that** the outer annular section (80) of the after-running device (26) has a cylindrical inside perimeter surface (90) by means of which the after-running device (26) is centered radially on a centering shoulder (72) of the main part (18) and which is provided with a plurality of equalization grooves (92) distributed over the perimeter which extend in the axial direction from the free end of the outer annular section (80).

9. Piston (10) according to claim 8, **characterized in that** the axial length of the equalization grooves (92) on the inside perimeter surface (90) of the outer annular section (80) is larger than the width of the centering shoulder (72) of the main part (18).

10. Piston (10) according to one of claims 5 to 9, **characterized in that** the free end of the outer annular section (80) of the after-running device (26) forms an annular shoulder (94) with which the after-running device (26) is supported on the main part (18) in the axial direction and which is provided with a plurality of connecting grooves (96) which run in the radial direction.

11. Piston (10) according to claim 10, **characterized in that** the connecting grooves (96) on the annular shoulder (94) connect the equalization grooves (88) on the outside perimeter surface (86) to the equalization grooves (92) on the inside perimeter surface (90) of the outer annular section (80).

12. Piston (10) according to one of claims 5 to 11, **characterized in that** the annular disc section (84) of the after-running device (26) is provided with at least one connecting duct (98) extending in the axial direction.

13. Piston (10) according to one of claims 5 to 12, **characterized in that** the inner annular section (82) of the after-running device (26) is slotted several times to form spring tabs (102).

14. Piston (10) according to claim 13, **characterized in that** each spring tab (102) has a lug (104) projecting radially inwards on the end, which can be engaged with a radial groove (76) made in a fixing shoulder (74) of the main part (18).

15. Piston (10) according to claim 14, **characterized in that** the lug (104) is provided on its side facing the pressure chamber (16) with a bevel (106).

16. Piston (10) according to one of the preceding claims, **characterized in that** the after-running device (26) is a single plastic injection molding.

17. Piston (10) according to one of the preceding claims, **characterized in that** the main part (18) is a solid body preferably of a non-ferrous material to which is attached if necessary a tubular sleeve or a coating forming the running surface (20), or the main part (18) is an essentially pot-shaped body preferably made in sheet steel which if necessary surrounds a preferably plastic filling body.

## Revendications

1. Piston plongeur (10) pour une limitation variable d'un espace de pression (16) dans une enveloppe (12) d'un cylindre hydraulique (14), en particulier un maître-cylindre d'accouplement pour véhicules automobiles, comportant
un élément principal (18) sur lequel est prévue une surface de roulement (20) pour un élément d'étanchéité situé côté enveloppe (22) qui rend étanche l'espace de pression (16) dans une position de fonctionnement du piston (10), et
un dispositif d'amenée (26) contre lequel l'élément d'étanchéité (22) est appliqué, dans une position de base (fig. 2) du piston (10), ce dispositif d'amenée (26) étant apte, dans la position de base du piston (10), à relier l'espace de pression (16) à une zone d'amenée (24) au-dessous et au-delà de l'élément d'étanchéité (22),
**caractérisé en ce que** le dispositif d'amenée (26) est fabriqué séparément de l'élément principal (18) et est relié sans jeu à celui-ci pour former le piston (10).

2. Piston (10) selon la revendication 1, **caractérisé en ce que** le dispositif d'amenée (26) est conçu comme un élément annulaire avec une section transversale sensiblement en U.

3. Piston (10) selon la revendication 1 ou 2, **caractérisé en ce que** le dispositif d'amenée (26) et l'élément principal (18) sont reliés à l'aide d'un assemblage à enclenchement.

4. Piston (10) selon l'une des revendications précédentes, **caractérisé en ce que** le diamètre extérieur de la surface de roulement (20) est légèrement supérieur au diamètre extérieur du dispositif d'amenée (26), l'élément principal (18) présentant entre la surface de roulement (20) et le dispositif d'amenée (26) une section de transition inclinée (70).

5. Piston (10) selon l'une des revendications précédentes, **caractérisé en ce que** le dispositif d'amenée (26) présente une section annulaire radialement extérieure (80) et une section annulaire radialement intérieure (82) qui sont reliées entre elles grâce à une section formant rondelle annulaire (84) située côté frontal.

6. Piston (10) selon la revendication 5, **caractérisé en ce que** la section annulaire extérieure (80) du dispositif d'amenée (26) a une surface périphérique extérieure cylindrique (86) contre laquelle l'élément d'étanchéité (22) est appliqué, dans la position de base (fig. 2) du piston (10), et qui est pourvue de plusieurs rainures d'équilibrage (88) qui sont réparties sur la périphérie et qui s'étendent dans le sens axial à partir de l'extrémité libre de la section annulaire extérieure (80).

7. Piston (10) selon la revendication 6, **caractérisé en ce que** les rainures d'équilibrage (88) prévues sur la surface périphérique extérieure (86) de la section annulaire extérieure (80) s'étendent sur toute la longueur de ladite surface périphérique extérieure (86).

8. Piston (10) selon l'une des revendications 5 à 7, **caractérisé en ce que** la section annulaire extérieure (80) du dispositif d'amenée (26) a une surface périphérique intérieure cylindrique (90) à l'aide de laquelle le dispositif d'amenée (26) se centre radialement contre un épaulement de centrage (72) de l'élément principal (18) et qui est pourvue de plusieurs rainures d'équilibrage (92) qui sont réparties sur la périphérie et qui s'étendent dans le sens axial à partir de l'extrémité libre de la section annulaire extérieure (80).

9. Piston (10) selon la revendication 8, **caractérisé en ce que** la longueur axiale des rainures d'équilibrage (92) sur la surface périphérique intérieure (90) de la section annulaire extérieure (80) est supérieure à la largeur de l'épaulement de centrage (72) de l'élément principal (18).

10. Piston (10) selon l'une des revendications 5 à 9, **caractérisé en ce que** l'extrémité libre de la section annulaire extérieure (80) du dispositif d'amenée (26) forme un épaulement annulaire (94) avec lequel le dispositif d'amenée (26) s'appuie dans le sens axial contre l'élément principal (18) et qui est pourvu de plusieurs rainures de liaison (96) s'étendant dans le sens axial.

11. Piston (10) selon la revendication 10, **caractérisé en ce que** les rainures de liaison (96) de l'épaulement annulaire (94) relient les rainures d'équilibrage (88) de la surface périphérique extérieure (86) aux rainures d'équilibrage (92) de la surface périphérique intérieure (90) de la section annulaire extérieure (80).

12. Piston (10) selon l'une des revendications 5 à 11, **caractérisé en ce que** la section formant rondelle annulaire (84) du dispositif d'amenée (26) est pourvue d'au moins un canal de liaison (98) qui s'étend dans le sens axial.

13. Piston (10) selon l'une des revendications 5 à 12, **caractérisé en ce que** la section annulaire intérieure (82) du dispositif d'amenée (26) est fendue plusieurs fois pour former des languettes élastiques (102).

14. Piston (10) selon la revendication 13, **caractérisé en ce que** chaque languette élastique (102) présente, côté extrémité, une saillie (104) dirigée radialement vers l'intérieur, qui est apte à être accouplée à une rainure radiale (76) prévue sur un épaulement de fixation (74) de l'élément principal (18).

15. Piston (10) selon la revendication 14, **caractérisé en ce que** la saillie (104) est pourvue, sur son côté tourné vers l'espace de pression (16), d'un biseau (106).

16. Piston (10) selon l'une des revendications précédentes, **caractérisé en ce que** le dispositif d'amenée (26) est moulé par injection, d'une seule pièce, en matière plastique.

17. Piston (10) selon l'une des revendications précédentes, **caractérisé en ce que** l'élément principal (18) est constitué par un corps plein de préférence en métal non ferreux sur lequel est prévu éventuellement un manchon tubulaire définissant la surface de roulement (20), ou un revêtement, ou **en ce qu'**il s'agit d'un corps sensiblement en forme de godet, de préférence en tôle d'acier, qui entoure éventuellement un corps de remplissage de préférence en matière plastique.
